# EUROPEAN PATENT APPLICATION

(11) **EP 4 142 336 A1**
(43) Date of publication of application: **01.03.2023**
(21) Application number: 20932424.3
(22) Date of filing: 22.04.2020
(51) Int. Cl.: H04W 16/28, H04W 72/04, H04W 88/02

(54) **TERMINAL**

(71) Applicant: NTT DOCOMO, INC., Chiyoda-Ku Tokyo 100-6150 (JP)
(72) Inventor: SHIBAIKE Naoya, Tokyo 100-6150 (JP); HARADA Hiroki, Tokyo 100-6150 (JP); NAGATA Satoshi, Tokyo 100-6150 (JP)
(74) Representative: Hoffmann Eitle
(86) International application number: PCT/JP2020/017406
(87) International publication number: WO 2021/214919

(57) **Abstract**

User equipment UE (200) receives a demodulation reference signal from a network. The UE (200) restricts ports or combinations of the ports used for generation of the demodulation reference signal in a case of using a different frequency band different from a frequency band including one or a plurality of frequency ranges, or in a case of applying subcarrier spacing wider than subcarrier spacing for the case of using the frequency band.

## Description

### Technical Field

The present disclosure relates to a terminal configured to execute radio communication, and particularly relates to a terminal configured to receive a reference signal from a network.

### Background Art

The 3rd generation partnership project (3GPP) has specified the 5th generation mobile communication system (also called 5G, new radio (NR), or next generation (NG)), and has been further developing a next generation specification called beyond 5G, 5G evolution, or 6G.

The 3GPP has Release 15 and Release 16 (NR) specifying operation in a plurality of frequency ranges, specifically, bands including an FR1 (410 MHz to 7.125 GHz) and an FR2 (24.25 GHz to 52.6 GHz).

There has also been examined NR supporting the range beyond 52.6 GHz and up to 71 GHz (Non Patent Literature 1). Furthermore, beyond 5G, 5G evolution, or 6G (from and after Release-18) aims to support also a frequency band exceeding 71 GHz.

### Citation List

### Non Patent Literature

Non Patent Literature 1: "New WID on Extending current NR operation to 71 GHz", RP-193229, 3GPP TSG RAN Meeting #86, 3GPP, December 2019

### Summary of Invention

Using a different frequency band such as a high frequency band exceeding 52.6 GHz and being different from the FR1 and the FR2 tends to have a problem like increase in phase noise between carriers. It is thus assumed to apply larger (wider) subcarrier spacing (SCS).

Such enlarged SCS leads to an extremely smaller ratio, than ratios for the FR1 and the FR2, of a channel coherent bandwidth to the SCS (that may be interpreted as a resource block (RB)).

An exemplary bandwidth exclusively constituted by two or three subcarriers may thus be wider than the channel coherent bandwidth having flat frequency response.

There are two types (Type 1 and Type 2) of demodulation reference signals (DMRSs) assuming flat frequency response in a bandwidth exclusively constituted by two or three consecutive subcarriers. However, the assumption may not be applicable to wider SCS.

DMRSs multiplexed with use of a plurality of antenna ports do not have flat frequency response and may not be normally received by a receiver, to cause a problem such as unsuccessful decoding of a physical downlink shared channel (PDSCH).

The following disclosure has been achieved in view of such a situation, and an object thereof is to provide a terminal configured to use a high frequency band exceeding 52.6 GHz and normally receive a demodulation reference signal (DMRS) even with large subcarrier spacing (SCS).

A terminal according to an aspect of the present disclosure includes: a receiver (control signal/reference signal processor 240) configured to receive a demodulation reference signal from a network; and a controller (controller 270) configured to restrict ports or combinations of the ports used for generation of the demodulation reference signal in a case of using a different frequency band different from a frequency band including one or a plurality of frequency ranges, or in a case of applying subcarrier spacing wider than subcarrier spacing for the case of using the frequency band.

A terminal according to another aspect of the present disclosure includes: a receiver (control signal/reference signal processor 240) configured to receive a plurality of types of demodulation reference signals from a network; and a controller (controller 270) configured to restrict the types of the demodulation reference signals in a case of using a different frequency band different from a frequency band including one or a plurality of frequency ranges, or in a case of applying subcarrier spacing wider than subcarrier spacing for the case of using the frequency band.

A terminal according to still another aspect of the present disclosure includes: a receiver (control signal/reference signal processor 240) configured to receive a single-symbol demodulation reference signal or a double-symbol demodulation reference signal from a network; and a controller (controller 270) configured to restrict to either the single-symbol demodulation reference signal or the double-symbol demodulation reference signal in a case of using a different frequency band different from a frequency band including one or a plurality of frequency ranges, or in a case of applying subcarrier spacing wider than subcarrier spacing for the case of using the frequency band.

### Brief Description of Drawings

Fig. 1 is a schematic entire configuration diagram of a radio communication system 10.
Fig. 2 is a view indicating frequency ranges used in the radio communication system 10.
Fig. 3 is a view illustrating exemplary configurations of a radio frame, a sub frame, and a slot used in the radio communication system 10.
Fig. 4 is a functional block configuration diagram of user equipment UE 200.
Fig. 5 is a view illustrating an exemplary configuration 1 (Type 1, single-symbol) of a DMRS.
Fig. 6 is a view illustrating an exemplary configuration 2 (Type 1, double-symbol) of the DMRS.
Fig. 7 is a view illustrating an exemplary configuration 3 (Type 2, single-symbol) of the DMRS.
Fig. 8 is a view illustrating an exemplary configuration 4 (Type 2, double-symbol) of the DMRS.
Fig. 9 is a graph indicating an exemplary relation between channel coherent bandwidth and delay spread.
Fig. 10 is a flowchart illustrating a flow of processing (exemplary operation 1) relevant to the DMRS in the UE 200.
Fig. 11 is a flowchart illustrating a flow of other processing (exemplary operation 2) relevant to the DMRS in the UE 200.
Fig. 12 is a flowchart illustrating a flow of still other processing (exemplary operation 3) relevant to the DMRS in the UE 200.
Fig. 13 is a diagram illustrating an exemplary hardware configuration of the UE 200.

### Description of Embodiments

An embodiment will be described hereinafter with reference to the figures. Identical functions and configurations will be denoted by identical or similar reference signs and will not be repeatedly described where appropriate.

### (1) Schematic entire configuration of radio communication system

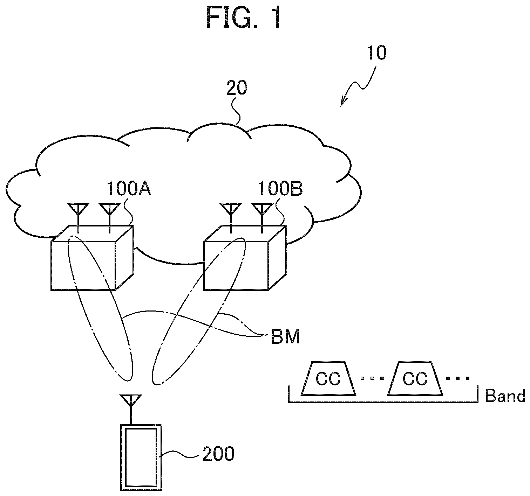

Fig. 1 is a schematic entire configuration diagram of a radio communication system 10 according to the present embodiment. The radio communication system 10 is configured in accordance with 5G new radio (NR), and includes a next generation-radio access network 20 (hereinafter, NG-R_AN 20), and user equipment 200 (hereinafter, UE 200).

The radio communication system 10 may alternatively be configured in accordance with a system called beyond 5G, 5G evolution, or 6G.

The NG-R_AN 20 includes a radio base station 100A (hereinafter, gNB 100A) and a radio base station 100B (hereinafter, gNB 100B). The radio communication system 10 including the gNBs and a number of the UEs is not limited to exemplary illustration in Fig. 1 in terms of its specific configuration.

The NG-RAN 20 actually includes a plurality of NG-RAN Nodes, specifically, the gNBs (or ng-eNBs), and is connected to a core network (5GC, not illustrated) according to 5G. Each of the NG-R_AN 20 and the 5GC may alternatively be expressed simply as a "network".

The gNB 100A and the gNB 100B are radio base stations according to 5G and are configured to execute radio communication according to the UE 200 and 5G. The gNB 100A, the gNB 100B, and the UE 200 can support, through control of radio signals transmitted from a plurality of antenna elements, massive multiple-input multiple-output (MIMO) for generation of a more directive beam BM, carrier aggregation (CA) using a plurality of bundled component carriers (CC), dual connectivity (DC) for simultaneous communication between any of the UE and the two NG-RAN Nodes, and the like.

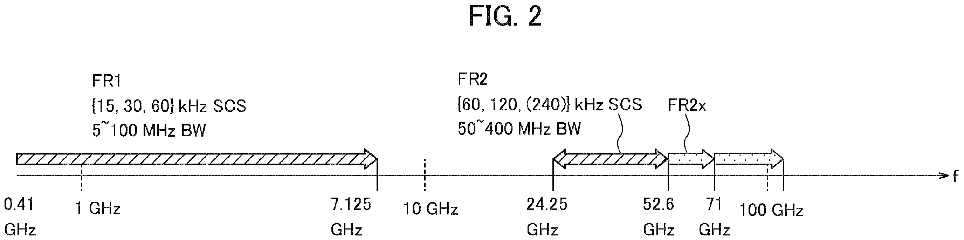

The radio communication system 10 supports a plurality of frequency ranges (FRs). Fig. 2 indicates frequency ranges used in the radio communication system 10.

As illustrated in Fig. 2, the radio communication system 10 supports the FR1 and the FR2. The FRs each has the following frequency band.
- FR1: 410 MHz to 7.125 GHz
- FR2: 24.25 GHz to 52.6 GHz

The FR1 may adopt subcarrier spacing (SCS) of 15 kHz, 30 kHz, or 60 kHz, and a bandwidth (BW) from 5 MHz to 100 MHz. The FR2 is higher in frequency than the FR1, and may adopt SCS of 60 kHz or 120 kHz (or possibly including 240 kHz), and a bandwidth (BW) from 50 MHz to 400 MHz.

The SCS may be interpreted as numerology. Numerology is defined in 3GPP TS38.300 and supports single subcarrier spacing in a frequency domain.

The radio communication system 10 further supports a high frequency band exceeding the FR2. Specifically, the radio communication system 10 supports a frequency band beyond 52.6 GHz and up to 71 GHz. Such a high frequency band may also be called "FR2x" for convenience.

In order to solve such a problem, cyclic prefix-orthogonal frequency division multiplexing (CP-OFDM)/discrete fourier transform-spread (DFT-S-OFDM) having larger subcarrier spacing (SCS) may be applied in a case of using a band exceeding 52.6 GHz.

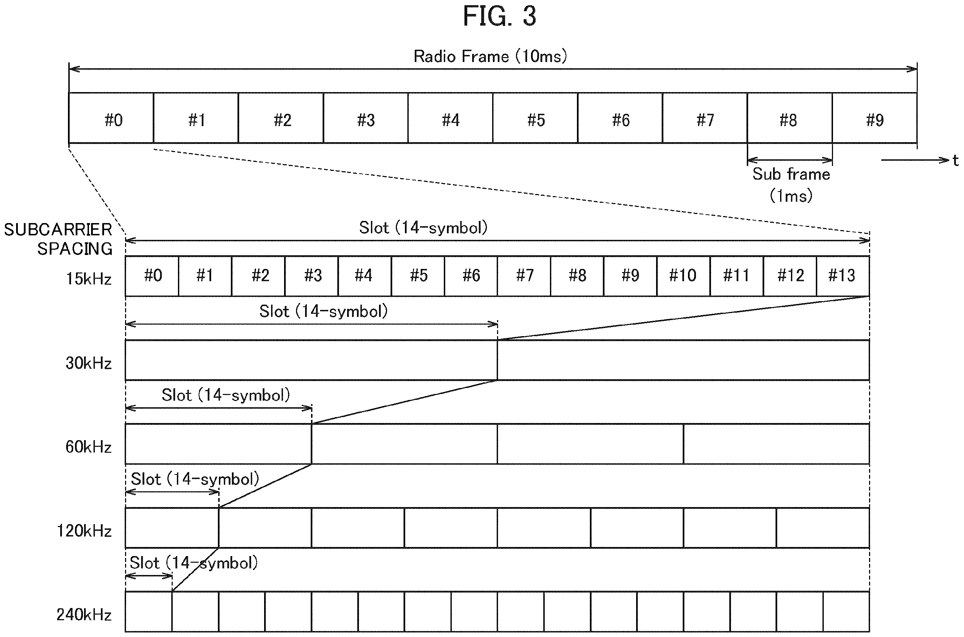

Fig. 3 illustrates exemplary configurations of a radio frame, a sub frame, and a slot used in the radio communication system 10.

As illustrated in Fig. 3, one slot is constituted by 14 symbols, and larger (wider) SCS lead to a shorter symbol period (and slot period). The SCS is not limited to spacing (a frequency) illustrated in Fig. 3. The SCS may have 480 kHz, 960, kHz, or the like.

Fig. 3 indicates a time direction (t) that may be called a time domain, a symbol period, symbol time, or the like. Furthermore, a frequency direction may be called a frequency domain, a resource block, a subcarrier, a bandwidth part (BWP), or the like.

The radio communication system 10 may use a plurality of reference signals (RS). The RSs will be described in terms of types thereof. The demodulation reference signal (DMRS) according to the present embodiment can be different in configuration from the 3GPP Release-15 or 16.

The DMRS is a type of reference signals, and is prepared for each type of channels. Unless otherwise specified, the DMRS may be prepared for a downlink data channel, specifically, a physical downlink shared channel (PDSCH). The DMRS prepared for an uplink data channel, specifically, a physical uplink shared channel (PUSCH), may be interpreted as being similar to the DMRS for the PDSCH.

The DMRS can be used for channel estimation in the UE 200 as part of coherent demodulation. The DMRS may be present only in a resource block (RB) used for PDSCH transmission.

The DMRSs may have a plurality of mapping types. Specifically, the DMRSs have a mapping type A and a mapping type B. An initial DMRS of the mapping type A is arranged in a second or third symbol in the slot. The DMRS of the mapping type A may be mapped with respect to a slot boundary regardless of where actual data transmission starts in the slot. The initial DMRS is arranged in the second or third symbol in the slot possibly because the initial DMRS is arranged after control resource sets (CORESET) .

The initial DMRS of the mapping type B may be arranged in an initial symbol for data allocation. In other words, the DMRS may be arranged not with respect to the slot boundary but relatively to where the data is arranged.

The DMRSs may have a plurality of types. Specifically, the DMRSs have a Type 1 and a Type 2. The Type 1 and the Type 2 are different in terms of mapping in the frequency domain and a maximum number of orthogonal reference signals. The Type 1 enables output of maximumly four orthogonal signals with a single-symbol DMRS, whereas the Type 2 enables output of maximumly eight orthogonal signals with a double-symbol DMRS.

### (2) Functional block configuration of radio communication system

The radio communication system 10 will be described next in terms of its functional block configuration. Specifically, described below is a functional block configuration of the UE 200.

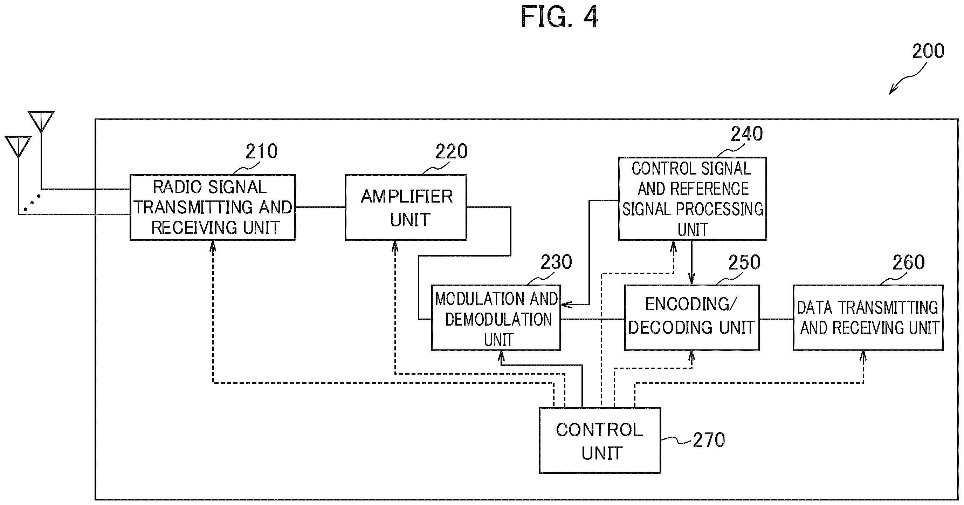

Fig. 4 is a functional block configuration diagram of the UE 200. As illustrated in Fig. 4, the UE 200 includes a radio signal transmitter/receiver 210, an amplifier 220, a modulator/demodulator 230, a control signal/reference signal processor 240, an encoder/decoder 250, a data transmitter/receiver 260, and a controller 270.

The radio signal transmitter/receiver 210 is configured to transmit and receive a radio signal according to NR. The radio signal transmitter/receiver 210 supports Massive MIMO, CA using the plurality of bundled CCs, DC for simultaneous communication between any of the UE and the two NG-RAN Nodes, and the like.

The amplifier 220 is constituted by a power amplifier (PA)/low noise amplifier (LNA) or the like. The amplifier 220 amplifies a signal output from the modulator/demodulator 230 to a predetermined power level. The amplifier 220 amplifies an RF signal output from the radio signal transmitter/receiver 210.

The modulator/demodulator 230 executes data modulation/demodulation, transmitted power setting, resource block allocation, or the like for each predetermined communication destination (e.g. the gNB 100A). The modulator/demodulator 230 may adopt cyclic prefix-orthogonal frequency division multiplexing (CP-OFDM)/discrete fourier transform-spread (DFT-S-OFDM). The DFT-S-OFDM may be applied to uplink (UL) as well as downlink (DL).

The control signal/reference signal processor 240 executes processing relevant to various types of control signals transmitted and received by the UE 200, and processing relevant to various types of reference signals transmitted and received by the UE 200.

Specifically, the control signal/reference signal processor 240 receives various types of control signals transmitted from the gNB 100A via a predetermined control channel, such as a control signal in a radio resource control layer (RRC). The control signal/reference signal processor 240 further transmits various types of control signals to the gNB 100A via the predetermined control channel.

The control signal/reference signal processor 240 executes processing with use of a reference signal (RS) such as the demodulation reference signal (DMRS) or a phase tracking reference signal (PTRS).

The DMRS is a known reference signal (pilot signal) between a terminal and a base station for an individual terminal, referred to in order for estimation of a fading channel used for data demodulation. The PTRS is a reference signal for an individual terminal, referred to in order for estimation of phase noise recognized as a problem in a high frequency band.

Examples of the reference signals may include, in addition to the DMRS and the PTRS, a channel state information-reference signal (CSI-RS), a sounding reference signal (SRS), and a positioning reference signal (PRS) for positional information.

The channels include a control channel and a data channel. Examples of the control channel include a physical downlink control channel (PDCCH), a physical uplink control channel (PUCCH), a random access channel (RACH), downlink control information (DCI) including a random access radio network temporary identifier (RA-RNTI), and a physical broadcast channel (PBCH).

Examples of the data channel include the physical downlink shared channel (PDSCH), and the physical uplink shared channel (PUSCH). Data may be regarded as data transmitted via the data channel.

The control signal/reference signal processor 240 according to the present embodiment constitutes a receiver configured to receive a demodulation reference signal (DMRS) from the network, specifically, the NG-R_AN 20.

As described above, the DMRS may be transmitted from the NG-RAN 20 (more specifically, the gNB 100A or the like) with use of a specific symbol in the slot.

The control signal/reference signal processor 240 may receive various types of DMRSs from the network. Specifically, the control signal/reference signal processor 240 can receive the DMRS of the Type 1 or the Type 2.

More specifically, the control signal/reference signal processor 240 can receive, from the network, the single-symbol DMRS or the double-symbol DMRS.

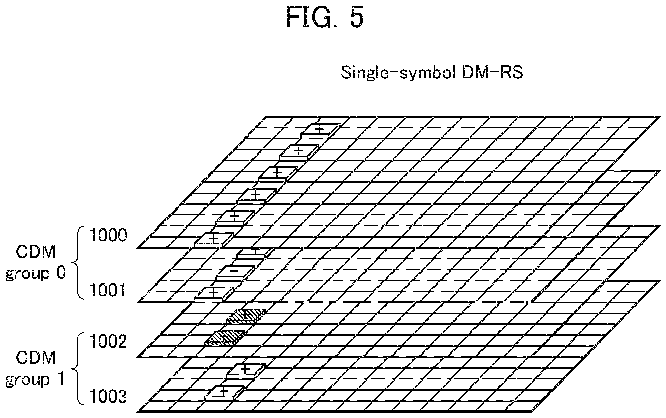

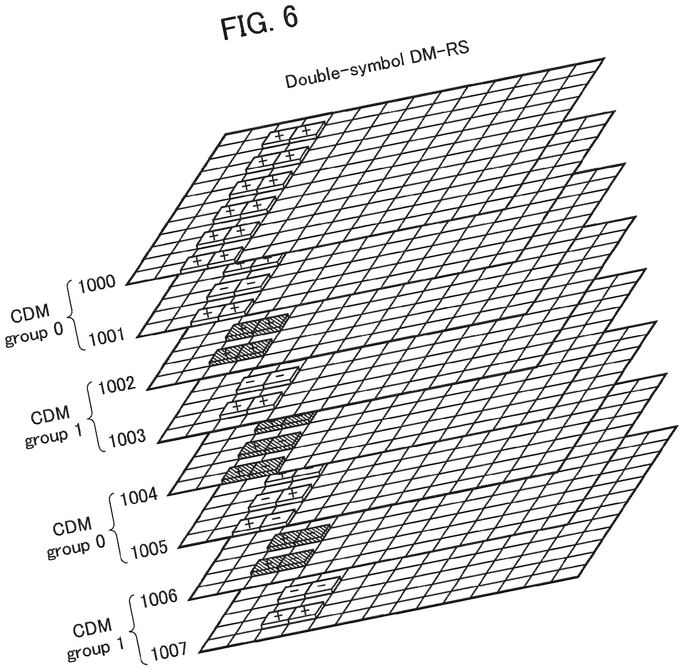

Figs. 5 to 8 each illustrate an exemplary configuration of the DMRS. Specifically, Fig. 5 illustrates an exemplary configuration 1 (Type 1, single-symbol) of the DMRS, and Fig. 6 illustrates an exemplary configuration 2 (Type 1, double-symbol) of the DMRS.

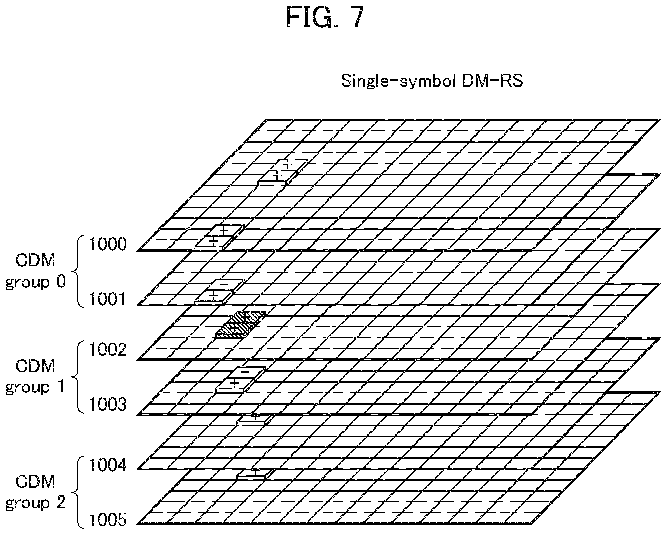

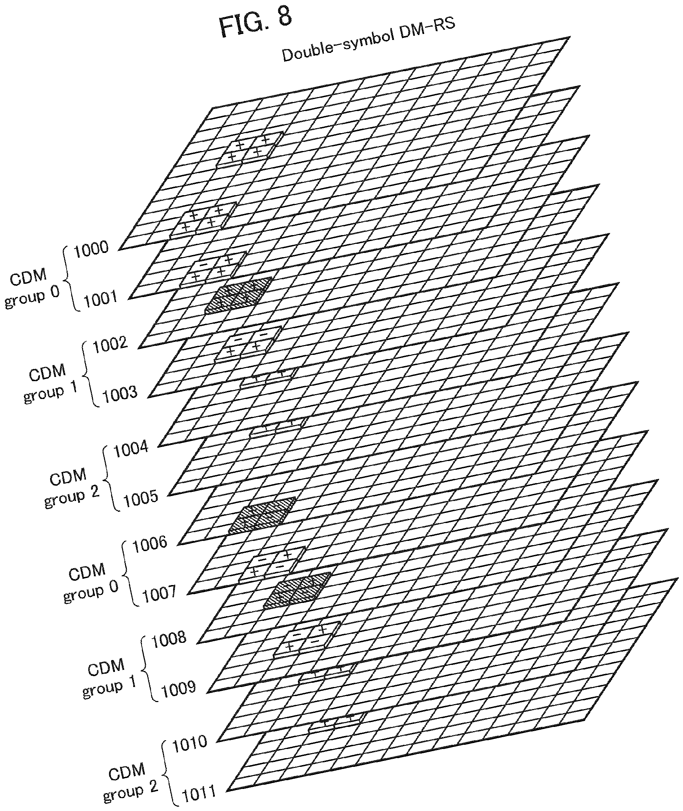

Fig. 7 illustrates an exemplary configuration 3 (Type 2, single-symbol) of the DMRS, and Fig. 8 illustrates an exemplary configuration 4 (Type 2, double-symbol) of the DMRS. The exemplary configurations will be further described in detail later.

The encoder/decoder 250 executes data division/connection, channel coding/decoding, or the like for each predetermined communication destination (e.g. the gNB 100A or the other gNB).

Specifically, the encoder/decoder 250 divides data output from the data transmitter/receiver 260 to have a predetermined size, and applies channel coding to the divided data. The encoder/decoder 250 also decodes data output from the modulator/demodulator 230 and connects the decoded data.

The data transmitter/receiver 260 transmits and receives a protocol data unit (PDU) and a service data unit (SDU). Specifically, the data transmitter/receiver 260 executes assembly/deassembly of the PDU/SDU in a plurality of layers (e.g. a media access control layer (MAC)), a radio link control layer (RLC), and a packet data convergence protocol layer (PDCP)), or the like. The data transmitter/receiver 260 also executes data error correction and data retransmission control in accordance with a hybrid automatic repeat request (hybrid ARQ).

The controller 270 controls the functional blocks constituting the UE 200. The controller 270 according to the present embodiment particularly executes control relevant to reception and processing of the DMRS.

Specifically, the controller 270 can change control relevant to reception and processing of the DMRS in accordance with size (width) of the frequency band used by the UE 200 or the subcarrier spacing (SCS).

More specifically, the controller 270 can change reception and processing of the DMRS prescribed by the 3GPP Release-15 or 16 in a case of using a different frequency band different from a frequency band including one or a plurality of frequency ranges (e.g. the FR1 or the FR2), such as the FR2x (52.6 GHz to 71 GHz, see Fig. 2) (hereinafter, when the different frequency band is used).

The controller 270 can further change reception and processing of the DMRS prescribed by the 3GPP Release-15 or 16 in a case of applying SCS wider than SCS for a case of using a frequency band including the FR1 and the FR2 (hereinafter, when wide SCS is applied). Examples of the SCS wider than SCR for the case of using the FR1 and the FR2 include 480 kHz and 960 kHz. However, SCS applied in the case of using the FR2x has only to be wider than the SCS applied in the case of using the FR1 and the FR2, and the SCS is not necessarily limited to 480 kHz, 960 kHz, or the like.

The controller 270 can restrict ports or combinations of the ports used for generation of DMRSs when the different frequency band is used and/or when wide SCS is applied. In other words, the controller 270 may be assumed to use only the DMRSs generated with use of specific ports or a combination of the ports when the different frequency band is used and/or when wide SCS is applied.

A port may indicate a port of any one of the gNBs, specifically, an antenna port.

Specifically, the controller 270 may use only part of a plurality of antenna ports used for generation of the DMRSs, or may use only part of combinations of the plurality of antenna ports used for generation of the DMRSs. Restriction of the antenna ports will be specifically exemplified later.

The controller 270 can also restrict the DMRSs in terms of their types when the different frequency band is used and/or when wide SCS is applied. In other words, the controller 270 may be assumed to use the DMRSs of only the Type 1 or the Type 2 when the different frequency band is used and/or when wide SCS is applied.

Specifically, the controller 270 may restrict to either one of the two types (Type 1 and the Type 2) of the DMRSs.

The controller 270 may further restrict to the single-symbol DMRSs or the double-symbol DMRSs when the different frequency band is used and/or when wide SCS is applied. In other words, the controller 270 may be assumed to use only the single-symbol DMRSs or the double-symbol DMRSs when the different frequency band is used and/or when wide SCS is applied.

### (3) Operation of radio communication system

The radio communication system 10 will be described next in terms of its operation. Specifically, description is made to operation relevant to transmission and reception of the DMRS between the network (NG-RAN 20) and the UE 200.

### (3.1) Assumptions and problems

As described above, the radio communication system 10 supports the frequency band (FR2x) beyond 52.6 GHz and up to 71 GHz. A high frequency band like the FR2x is essentially different from the FR1 and the FR2 in the following points.

### (Channel/Radio wave propagation)

- increase in applicable bandwidth (at about 13 GHz (57 GHz to 71 GHz unlicensed))
- low delay spread caused by large path-loss due to non-line of sight (NLOS)

### (Device (Terminal))

- (a massive antenna constituted by) a small antenna element according to a wavelength
- high directivity (narrow beam width) according to analog beam formation
- decrease in power amplifier efficiency (increase in peak-to-average power ratio (PAPR))
- increase in phase noise (applicability of larger SCS and shorter symbol time)

As described above, a high frequency band like the FR2x assumes application of wider SCS (e.g. 240 kHz, 480 kHz, or 960 kHz). In such a case, a ratio of the channel coherent bandwidth to size of the SCS (that may be interpreted as the RB) can be extremely smaller than the ratio for the FR1 or the FR2.

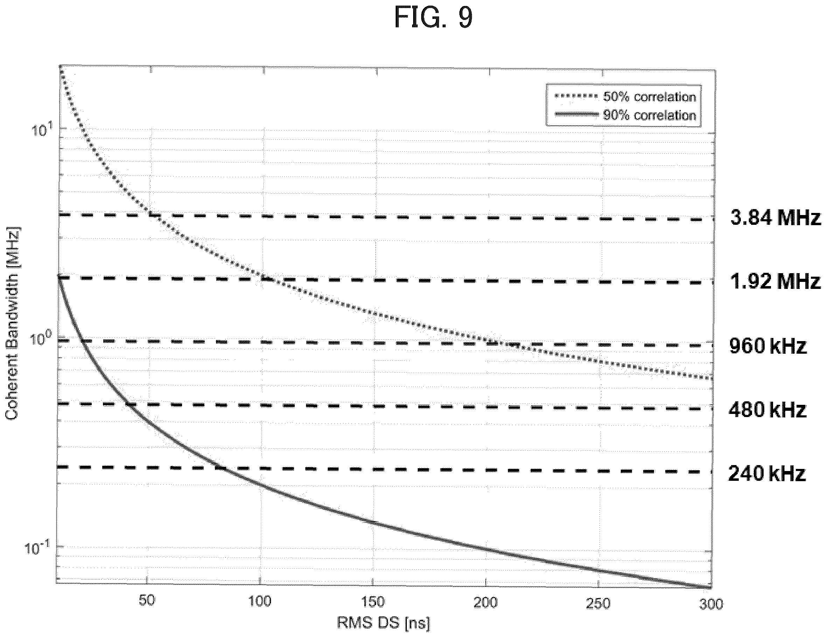

Fig. 9 indicates an exemplary relation between the channel coherent bandwidth and the delay spread. Frequency response is assumed to be flat in the channel coherent bandwidth.

As indicated in Fig. 9, the channel coherent bandwidth decreases as the delay spread (root-mean-square delay spread (RMS DS)) increases, whereas the ratio of the channel coherent bandwidth to the size of the SCS decreases as the SCS increases in width as described above. This can lead to failure in securement of flat frequency response.

As described above, the 3GPP Release-15 or 16 supports the DMRSs of the Type 1 and the Type 2. Specifically, the 3GPP Release-15 or 16 prescribes the Type 1 and the Type 2 as follows.

- Type 1 (FD Comb 2 + 2 CS + TD-OCC, see Figs. 5 and 6)
- Supports maximumly four orthogonal signals (single-symbol) or eight orthogonal signals (double-symbol)
- Frequency response (channel frequency response) is assumed to be flat among three consecutive subcarriers.
- Type 2(FD-OCC + TD-OCC + FDM, see Figs. 7 and 8)
- Supports maximumly six orthogonal signals (single-symbol) or twelve orthogonal signals (double-symbol)
- Frequency response (channel frequency response) is assumed to be flat between two consecutive subcarriers.

In consideration of use of analog beam formation coping with such a situation and large propagation loss, and the like, the DMRSs in a high frequency band like the FR2x are assumed to need multiplexing in a number smaller than that for the FR1 or the FR2 and be sufficient with such a small multiplexing number (capacity).

As described above, the DMRSs of the Type 1 and the Type 2 assume flat frequency response in a bandwidth exclusively constituted by two or three consecutive subcarriers. However, when SCS increases in width, the bandwidth exclusively constituted by two or three consecutive subcarriers may become larger than the channel coherent bandwidth.

The assumption of flat frequency response may not be applicable. A combination of specific antenna ports may thus inhibit appropriate multiplexing (e.g. a frequency division-orthogonal cover code (FD-OCC)).

Described below is exemplary operation relevant to transmission and reception, as well as processing of the DMRSs in consideration of characteristics of a high frequency band like the FR2x.

### (3.2) Outlined operation

As described above, application of wide SCS in such a case of using a high frequency band like the FR2x may inhibit appropriate multiplexing between the antenna ports used for generation of the DMRSs, to lead to incorrect decoding of the PDSCH.

The UE 200 (and the gNB, the same applies hereinafter) may execute the following operation for generation of the DMRSs.

### • (Exemplary operation 1): restrict applicable ports or combinations of the ports

Specifically, the UE 200 restricts in accordance with a code domain multiplexing (CDM) group or a specific rule.

### • (Exemplary operation 2): restrict the type of applicable DMRSs

Specifically, the UE 200 restricts only to the Type 1 or the Type 2.

### • (Exemplary operation 3): restrict the number of DM-RS symbols to be front loaded

Specifically, the UE 200 restricts only to the single-symbol or the double-symbol arranged ahead in the slot.

### (3.3) Exemplary operation

The exemplary operation 1 to 3 will be described in detail below.

### (3.3.1) Exemplary operation 1

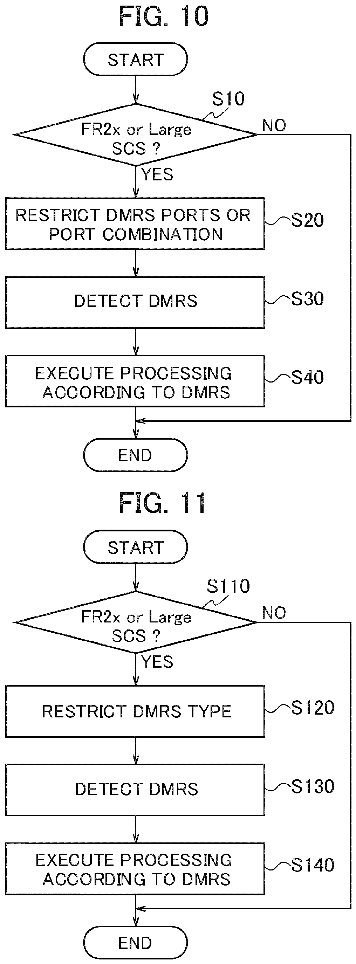

Fig. 10 illustrates a flow of processing (the exemplary operation 1) relevant to the DMRS in the UE 200. As illustrated in Fig. 10, the UE 200 determines whether to use a high frequency band like the FR2x, or to apply SCS wider than the SCS for the FR1 or FR2 (S10).

Specifically, the UE 200 acquires a frequency band to be used and/or SCS to be applied, by means of signaling in a lower layer (e.g. the downlink control information (DCI)) or signaling in a higher layer (e.g. the RRC).

The UE 200 can determine whether or not to use the high frequency band (when the different frequency band is used), or whether or not to apply wide SCS (when wide SCS is applied) in accordance with such signaling or the like. In a case where SCS to be applied when a high frequency band like the FR2x is used can be uniquely specified, the UE 200 may not have to determine in accordance with the signaling.

The UE 200 restricts ports or combinations of the ports applicable to generation of the DMRSs when the different frequency band is used and/or when wide SCS is applied (S20) .

Specifically, the UE 200 uses only part of the plurality of antenna ports used for generation of the DMRSs, or uses only part of combinations of the plurality of antenna ports used for generation of the DMRSs. In other words, the UE 200 may be assumed to use only the DMRSs generated with use of specific ports or a combination of the ports.

The UE 200 tries to detect the DMRS transmitted from the network in accordance with the ports or the combination of the ports thus specifically restricted (S30). The ports or the combinations of the ports to be restricted will be exemplarily described later.

The UE 200 executes processing according to the detected DMRSs (S40). Specifically, the UE 200 executes setting for reception of the PDSCH in accordance with the detected DMRSs.

The ports or the combination of the ports applicable to generation of the DMRSs may be restricted as follows, for example.

### • (Option 1): only a combination of ports belonging to different CDM groups is applied to multiplexing

This can avoid combinations of ports that can lead to unsuccessful multiplexing due to frequency selective fading.
- (Case of Type 1 DMRS/single-symbol (see Fig. 5)): the following combinations of ports may be excluded so as not to be used for multiplexing.
- Ports 1000 and 1001 (CDM group 0)
- Ports 1002 and 1003 (CDM group 1)
- (Case of Type 1 DMRS/double-symbol (see Fig. 6)): the following combinations of ports may be excluded so as not to be used for multiplexing.
- Combination of ports 1000, 1001, 1004, and 1005 (CDM group 0)
- Combination of ports 1002, 1003, 1006, and 1007 (CDM group 1)
- (case of Type 2 DMRS/single-symbol (see Fig. 7)): the following combinations of ports may be excluded so as not to be used for multiplexing.
- Ports 1000 and 1001 (CDM group 0)
- Ports 1002 and 1003 (CDM group 1)
- Ports 1004 and 1005 (CDM group 2)
- (Case of Type 2 DMRS/double-symbol (see Fig. 8)): the following combinations of ports may be excluded so as not to be used for multiplexing.
- Combination of ports 1000, 1001, 1006, and 1007 (CDM group 0)
- Combination of ports 1002, 1003, 1008, and 1009 (CDM group 1)
- Combination of ports 1004, 1005, 1010, and 1011 (CDM group 2)

### • (Option 2): only a combination of specific ports is applied to multiplexing

Specifically, allowed are several combinations of ports included in an identical CDM group. This can keep a large multiplexing number (capacity) as well as can avoid unsuccessful multiplexing.
- (Case of Type 1 DMRS/single-symbol (see Fig. 5)): the following combinations of ports may be excluded so as not to be used for multiplexing.
- Ports 1000 and 1001
- Ports 1002 and 1003
- (Case of Type 1 DMRS/double-symbol (see Fig. 6)): the following combinations of ports may be excluded so as not to be used for multiplexing.
- Ports 1000 and 1001
- Ports 1002 and 1003
- Ports 1004 and 1005
- Ports 1006 and 1007

For example, the combination of the ports 1000 and 1004 may be used even though these ports belong to an identical CDM group.
- (case of Type 2 DMRS/single-symbol (see Fig. 7)): the following combinations of ports may be excluded so as not to be used for multiplexing.
- Ports 1000 and 1001
- Ports 1002 and 1003
- Ports 1004 and 1005
- (Case of Type 2 DMRS/double-symbol (see Fig. 8)): the following combinations of ports may be excluded so as not to be used for multiplexing.
- Ports 1000 and 1001
- Ports 1002 and 1003
- Ports 1004 and 1005
- Ports 1006 and 1007
- Ports 1008 and 1009
- Ports 1010 and 1011

For example, the combination of the ports 1000 and 1006 can be used even though these ports belong to an identical CDM group. The above combinations may lead to unsuccessful multiplexing, as in the case of Type 2 DMRS/single-symbol.

A different combination may alternatively be assumed (e.g. a combination of the Option 1 and the Option 2). Furthermore, the exemplary operation 1 may be combined with exemplary operation 2 or 3 to be described below.

### (3.3.2) Exemplary operation 2

Fig. 11 illustrates a flow of other processing (the exemplary operation 2) relevant to the DMRS in the UE 200. Mainly described below are differences from the exemplary operation 1.

S110 in Fig. 11 is similar to S10 in Fig. 10. The UE 200 determines whether to use a high frequency band like the FR2x, or to apply SCS wider than the SCS for the FR1 or FR2.

The UE 200 restricts the types of the DMRSs applicable to generation of the DMRSs when the different frequency band is used and/or when wide SCS is applied (S120).

Specifically, the UE 200 uses only one of the Type 1 and the Type 2. The UE 200 may thus be assumed to use only one of the Type 1 and the Type 2.

The UE 200 tries to detect the DMRSs transmitted from the network, assuming the DMRSs of the restricted type (S130).

S140 is similar to S40 in Fig. 10. The UE 200 executes processing according to the detected DMRSs. Specifically, the UE 200 executes setting for reception of the PDSCH in accordance with the detected DMRSs.

When restricted only to the Type 1 DMRSs, larger DMRS density (improvement in demodulation performance) can be achieved in a frequency domain per port. A high frequency band like the FR2x may be assumed to need multiplexing capability smaller than that for the FR1 or the FR2.

When restricted only to the Type 2 DMRSs, larger multiplexing capacity can be achieved. The exemplary operation 2 is preferred to be combined particularly with the exemplary operation 1.

### (3.3.3) Exemplary operation 3

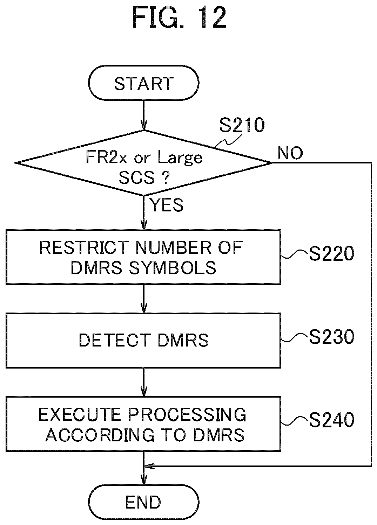

Fig. 12 illustrates a flow of still other processing (the exemplary operation 3) relevant to the DMRS in the UE 200. Mainly described below are differences from the exemplary operation 1.

S210 in Fig. 12 is similar to S10 in Fig. 10. The UE 200 determines whether to use a high frequency band like the FR2x, or to apply SCS wider than the SCS for the FR1 or FR2.

The UE 200 restricts the number of symbols of the DMRSs when the different frequency band is used and/or when wide SCS is applied (S220).

Specifically, the UE 200 restricts to the single-symbol DMRSs or the double-symbol DMRSs when the different frequency band is used and/or when wide SCS is applied. In other words, the UE 200 may be assumed to use only the single-symbol or the Type 2 double-symbol.

The UE 200 tries to detect the DMRSs transmitted from the network, assuming the DMRSs of any one of the restricted symbol (S230).

S240 is similar to S40 in Fig. 10. The UE 200 executes processing according to the detected DMRSs. Specifically, the UE 200 executes setting for reception of the PDSCH in accordance with the detected DMRSs.

The single-symbol DMRSs can allow increase in the number of symbols usable in data (i.e. a higher data rate cab be achieved).

In the case of the double-symbol DMRSs, decoding of the DMRS of the second symbol contributes to accurate comprehension of the DMRS multiplexed between ports at the receiver.

### (4) Functions and effects

The embodiment described above achieves the following functional effects. Specifically, the UE 200 can restrict ports or combinations of the ports used for generation of the DMRSs when the different frequency band is used and/or when wide SCS is applied.

The UE 200 can also restrict the DMRSs in terms of their types (the Type 1 and the Type 2) when the different frequency band is used and/or when wide SCS is applied.

The UE 200 can further restrict to the single-symbol DMRSs or the double-symbol DMRSs when the different frequency band is used and/or when wide SCS is applied.

The DMRSs can thus be normally received even with a high frequency band like the FR2x and large SCS. Specifically, even with large SCS and a bandwidth exclusively constituted by two or three subcarriers being wider than the channel coherent bandwidth, restriction of the DMRSs avoids unsuccessful multiplexing of the DMRSs and the UE 200 can normally receive the DMRSs.

The UE 200 can thus correctly decode the PDSCH in accordance with the DMRSs.

### (5) Other embodiments

The embodiment has been described above. As obvious to those skilled in the art, the present disclosure should not be limited to the description of the embodiment but can be modified and improved in various manners.

For example, the above embodiment exemplifies some restriction to the DMRSs when the different frequency band is used and/or when wide SCS is applied. Even when SCS identical to the SCS for the FR1 or the FR2 is applied, such restriction to the DMRSs may be executed when the different frequency band is used.

In contrast, the DMRSs may be restricted as described above when wide SCS such as 240 kHz, 480 kHz, or 960 kHz is applied to the FR1 or the FR2.

The above embodiment is described with reference to the DMRSs for the PDSCH. The present disclosure may alternatively be applied to different DMRSs (e.g. the DMRSs for the PUSCH (in an uplink direction)).

The FR2x may be divided into a frequency range of at most 70 GHz and a frequency range of at least 70 GHz, and any of the exemplary operation described above may be partially applied to the frequency range of at least 70 GHz and the frequency range of at most 70 GHz.

The block diagram (Fig. 4) referred to in the description of the above embodiment illustrates blocks of functional units. These functional blocks (structural components) are each achieved by a desired combination of at least one of hardware and software. Each of the functional blocks is not particularly limited in terms of its manner of achievement. That is, each of the functional blocks may be achieved with use of one device coupled physically or logically. Alternatively, two or more devices separated physically or logically may be directly or indirectly (e.g. wiredly or wirelessly) connected to each other, and each of the functional blocks may be achieved with use of these plural devices. The functional blocks may be achieved by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (structural component) for transmission is called a transmitting unit or a transmitter. As described above, the manner of achievement is not particularly limited for any one of the above.

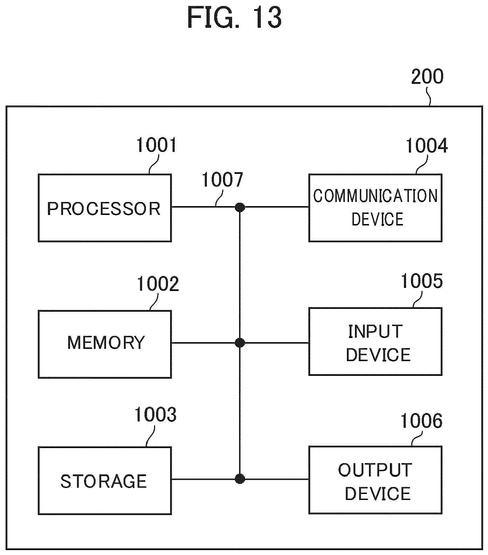

Furthermore, the UE 200 described above may function as a computer configured to execute processing according to a radio communication method of the present disclosure. Fig. 13 is a diagram illustrating an exemplary hardware configuration of the UE 200. As illustrated in Fig. 13, the UE 200 may be configured as a computer device including a processor 1001, a memory 1002, a storage 1003, a communication device 1004, an input device 1005, an output device 1006, a bus 1007, and the like.

The term "device" in the following description can be regarded as a circuit, a device, a unit, or the like. The device has a hardware configuration that may include one or plurality of the devices illustrated in the figure, or may not include some of the devices.

The functional blocks (see Fig. 4) of the UE 200 are achieved by any of hardware elements of the computer device or any combination of the hardware elements.

The processor 1001 executes operation by loading predetermined software (a program) on hardware such as the processor 1001 or the memory 1002, controls communication by the communication device 1004, and controls at least one of reading and writing of data in the memory 1002 and the storage 1003, to achieve various functions of the UE 200.

The processor 1001 operates an operating system to control the entire computer, for example. The processor 1001 may be constituted by a central processing unit (CPU) including an interface with a peripheral device, a control device, an operating device, a register, and the like.

Moreover, the processor 1001 reads a program (program code), a software module, data, and the like from at least one of the storage 1003 and the communication device 1004 to the memory 1002, and executes various processing in accordance therewith. Examples of the program include a program configured to cause the computer to execute at least part of the operation described in the above embodiments. The various processing mentioned above may be executed by one processor 1001 or may be executed simultaneously or sequentially by two or more processors 1001. The processor 1001 may be implemented with one or more chips. The program may alternatively be transmitted from the network via a telecommunication line.

The memory 1002 is a computer readable recording medium, and may be constituted by at least one of a read only memory (ROM), an erasable programmable ROM (EPROM), an electrically erasable programmable ROM (EEPROM), a random access memory (RAM), and the like. The memory 1002 may be called a register, a cache, a main memory (main storage device), or the like. The memory 1002 can store programs (program codes), software modules, and the like configured to execute the method according to the embodiment of the present disclosure.

The storage 1003 is a computer readable recording medium, and may be constituted by at least one of an optical disk such as a compact disc ROM (CD-ROM), a hard disk drive, a flexible disk, a magneto-optical disk (e.g. a compact disk, a digital versatile disk, or a Blu-ray (registered trademark) disk), a smart card, a flash memory (e.g. a card, a stick, or a key drive), a floppy (registered trademark) disk, a magnetic strip, and the like. The storage 1003 may be called an auxiliary storage device. The recording medium may be a database including the memory 1002 and/or the storage 1003, a server, or any other appropriate medium.

The communication device 1004 is hardware (a transmission/reception device) configured to execute communication between computers via a wired and/or wireless network. The communication device 1004 is also called, a network device, a network controller, a network card, a communication module, or the like.

The communication device 1004 may include a highfrequency switch, a duplexer, a filter, a frequency synthesizer, and the like in order to achieve at least one of frequency division duplex (FDD) and time division duplex (TDD), for example.

The input device 1005 is configured to receive external input (examples include a keyboard, a mouse, a microphone, a switch, a button, and a sensor). The output device 1006 is configured to externally output data (examples include a display, a speaker, and an LED lamp). The input device 1005 and the output device 1006 may be integrated with each other (e.g. a touch panel).

The respective devices such as the processor 1001 and the memory 1002 are connected to each other via the bus 1007 for communication of information. The bus 1007 may be constituted by a single bus or may be constituted by different buses each provided between specific ones of the devices.

Furthermore, the device may include hardware such as a microprocessor, a digital signal processor (DSP), an application specific integrated circuit (ASIC), a programmable logic device (PLD), and a field programmable gate array (FPGA). Part or all of the functional blocks may be achieved by the hardware. For example, the processor 1001 may be implemented with use of at least one of these types of hardware.

Information is notified in a manner not limited to that described in the above aspects/embodiments, and may be executed in a different manner. For example, information may be notified by physical layer signaling (e.g. downlink control information (DCI) or uplink control information (UCI), higher layer signaling (e.g. RRC signaling, medium access control (MAC) signaling, broadcasting information (a master information block (MIB), a system information block (SIB)), any other signal, or a combination thereof. The RRC signaling may be called an RRC message, and examples thereof include an RRC connection setup message and an RRC connection reconfiguration message.

Each of the above aspects/embodiments described in the present disclosure may be applied to at least one of long term evolution (LTE), LTE-Advanced (LTE-A), SUPER 3G, IMT-Advanced, the 4th generation mobile communication system (4G), the 5th generation mobile communication system (5G), future radio access (FRA), new radio (NR), W-CDMA (registered trademark), GSM (registered trademark), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), a system adopting any other appropriate system, and a next-generation system expanded in accordance with the above. Furthermore, a plurality of systems may be combined (e.g. a combination including at least one of the LTE or the LTE-A, and 5G).

Unless there is no inconsistency, processing procedures, sequences, flowcharts, and the like described in the aspects/embodiments according to the present disclosure may be changed in order. For example, the methods described in the present disclosure provide various step elements executed in an exemplary order, but are not limited to the exemplified specific order.

Specific operation to be executed by the base station in the present disclosure may be executed by its upper node in some cases. In a network constituted by one or more network nodes including a base station, the various operation executed for communication with a terminal can be obviously executed by at least one of the base station and a different network node other than the base station (possibly an MME, an S-GW, or the like, but not limited thereto). The above exemplifies the case where there is one network node other than the base station. There may alternatively be provided a combination of a plurality of other network nodes (e.g. the MME and the S-GW).

Information and signals (information and the like) can be output from the higher layer (or the lower layer) to the lower layer (or the higher layer). The information or the signals may be input and output via a plurality of network nodes.

Input/output information may be stored in a specific location (e.g. a memory) or may be managed in a management table. The information to be input/output can be overwritten, updated, or added. The output information may be deleted. The input information may be transmitted to another device.

Determination may be made in accordance with a value indicated by one bit (0 or 1), a Boolean value (true or false), or comparison of numerical values (e.g. comparison with a predetermined value).

Each of the aspects/embodiments described in the present disclosure may be adopted separately or in combination, or may be switched during execution. Notification of predetermined information (e.g. notification of "being X") is not limitedly executed explicitly, but may be executed implicitly (e.g. without notification of the predetermined information).

Regardless of being called software, firmware, middleware, a microcode, a hardware description language, or any other name, software should be interpreted broadly to indicate an instruction, an instruction set, a code, a code segment, a program code, a program, a subprogram, a software module, an application, a software application, a software package, a routine, a subroutine, an object, an executable file, an execution thread, a procedure, a function, and the like.

Furthermore, software, an instruction, information, and the like may be transmitted and received via a transmission medium. For example, when software is transmitted from a website, a server, or any other remote source with use of at least one of a wired technique (a coaxial cable, an optical fiber cable, a twisted pair, a digital subscriber line (DSL), or the like) and a wireless technique (infrared light, a microwave, or the like), at least one of these wired and wireless techniques is included in the definition of the transmission medium.

Information, signals, and the like mentioned in the present disclosure may be expressed with use of any of various different techniques. For example, data, an instruction, a command, information, a signal, a bit, a symbol, a chip, or the like that can be mentioned in the above entire description may be expressed by means of voltage, current, an electromagnetic wave, a magnetic field or magnetic particles, an optical field or photons, or a desired combination thereof.

The terms mentioned in the present disclosure and terms necessary for comprehension of the present disclosure may be replaced with terms having same or similar meanings. For example, at least one of a channel and a symbol may be a signal (signaling). A signal may be a message. Furthermore, a component carrier (CC) may be called a carrier frequency, a cell, a frequency carrier, or the like.

The terms "system" and "network" mentioned in the present disclosure are used interchangeably.

Furthermore, information, parameters, and the like mentioned in the present disclosure may be expressed with use of an absolute value, a relative value from a predetermined value, or corresponding different information. For example, a radio resource may be indicated with use of an index.

Name of the above parameters are not restrictive in any respect. Furthermore, a formula and the like including these parameters may be different from those explicitly disclosed in the present disclosure in some cases. Various channels (e.g. the PUCCH and the PDCCH) and information elements can be identified with any preferred names. Such various names assigned to the various channels and the information elements shall not be restrictive in any respect.

The present disclosure mentions terms such as "base station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like, which can be used interchangeably. The base station may also be called with terms such as a macro cell, a small cell, a femtocell, and a pico cell.

A base station can accommodate one or a plurality of (e.g. three) cells (also called sectors). A base station accommodating a plurality of cells has an entire coverage area that can be divided into a plurality of smaller areas. In each of the smaller areas, communication service can be provided by means of a base station subsystem (e.g. a small indoor base station (remote radio head (RRH)).

The term "cell" or "sector" indicates part or all of the coverage area of at least one of a base station and a base station subsystem configured to execute communication service in the coverage area.

The present disclosure mentions terms such as "mobile station (MS)", "user terminal", "user equipment (UE)", "terminal", and the like, which can be used interchangeably.

The mobile station is called by those skilled in the art with use of a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or some other appropriate terms.

At least one of a base station and a mobile station may be called a transmitting device, a receiving device, a communication device, or the like. At least one of a base station and a mobile station may be a device mounted on a moving body, a moving body itself, or the like. The moving body may be a vehicle (e.g. a car or an airplane), a moving body configured to move unmanned (e.g. a drone or an automatically driven vehicle), or a robot (manned or unmanned). Examples of at least one of a base station and a mobile station also include a device that does not necessarily move during communication. For example, at least one of a base station and a mobile station may be an internet of things (IoT) device such as a sensor.

Furthermore, the base station according to the present disclosure may be regarded as a mobile station (user terminal, the same applies hereinafter). For example, each of the aspects/embodiments of the present disclosure may be applied to a configuration for communication between a plurality of mobile stations (that may be called device-to-device (D2D), vehicle-to-everything (V2X), or the like) replacing communication between a base station and a mobile station. In this case, the mobile station may have the function of the base station. Terms such as "uplink" and "downlink" may also be regarded as terms corresponding to inter-terminal communication (e.g. "side"). For example, an uplink channel, a downlink channel, or the like may alternatively be regarded as a side channel.

Similarly, the mobile station according to the present disclosure may be regarded as the base station. In this case, the base station may have the function of the mobile station.

The radio frame may be constituted by one or a plurality of frames in a time domain. The one or the plurality of frames in the time domain may each be called a sub frame. The sub frame may further be constituted by one or a plurality of slots in the time domain. The sub frame may have a fixed time length (e.g. 1 ms) independent from numerology.

Numerology may be a communication parameter applied to at least one of transmission and reception of a certain signal or channel. Numerology may indicate at least one of subcarrier spacing (SCS), bandwidth, symbol length, cyclic prefix length, a transmission time interval (TTI), the number of symbols per TTI, a radio frame configuration, specific filtering processing executed by a transmitter/receiver in a frequency domain, specific windowing processing executed by the transmitter/receiver in a time domain, and the like.

A slot may be constituted by one or a plurality of symbols in a time domain (an orthogonal frequency division multiplexing (OFDM)) symbol, a single carrier frequency division multiple access (SC-FDMA) symbol, or the like) The slot may be a time unit according to numerology.

The slot may include a plurality of mini slots. Each of the mini slots may be constituted by a single or a plurality of symbols in the time domain. The mini slots may also be called subslots. Each of the mini slots may be constituted by symbols smaller in the number than the slots. The PDSCH (or PUSCH) transmitted in a time unit larger than the mini slot may be called a PDSCH (or PUSCH) of the mapping type A. The PDSCH (or PUSCH) transmitted in the mini slot may be called a PDSCH (or PUSCH) of the mapping type B.

A radio frame, a sub frame, a slot, a mini slot, and a symbol each indicate a time unit for signal transmission. A radio frame, a sub frame, a slot, a mini slot, and a symbol may each have a different name.

For example, one sub frame may be called a transmission time interval (TTI), a plurality of consecutive sub frames may be called the TTI, or one slot or one mini slot may be called the TTI. At least one of the sub frame and the TTI may be a sub frame (1 ms) in existing LTE, a period shorter than 1 ms (e.g. 1 to 13 symbols), or a period longer than 1 ms. The TTI is indicated with a unit that may not be called a sub frame but may be called a slot or a mini slot.

The TTI indicates a minimum time unit for scheduling in radio communication. For example, an LTE system includes scheduling of allocating, by the base station in the TTI unit, a radio resource (frequency bandwidth, transmitted power, or the like that can be used by the user terminal) to each user terminal. The TTI is not limited thereto in terms of its definition.

The TTI may be a transmission time unit such as a data packet (transport block), a code block, or a codeword that is channel encoded, or may be a processing unit such as scheduling or link adaptation. When the TTI is provided, a time section (e.g. the number of symbols) to be actually mapped with a transport block, a code block, a codeword, or the like may be shorter than the TTI.

In a case where one slot or a one mini slot is called the TTI, at least one TTI (i.e. at least one slit or at least one mini slot) may serve as a minimum time unit for scheduling. The slots (the mini slots) constituting the minimum time unit for the scheduling may be controlled in terms of their number.

The TTI having the time length of 1 ms may be called an ordinary TTI (the TTI in LTE Rel. 8-12), a normal TTI, a long TTI, an ordinary sub frame, a normal sub frame, a long sub frame, a slot, or the like. A TTI shorter than the ordinary TTI may be called a shortened TTI, a short TTI, a partial or fractional TTI, a shortened sub frame, a short sub frame, a mini slot, a subslot, a slot, or the like.

The long TTI (e.g. the ordinary TTI or the sub frame) may be regarded as a TTI having a time length exceeding 1 ms, and the short TTI (e.g. the shortened TTI) may be regarded as a TTI having a length shorter than the length of the long TTI and equal to or more than 1 ms.

A resource block (RB) is a resource allocation unit in a time domain and a frequency domain, and may include one or a plurality of consecutive subcarriers in the frequency domain. The RB includes subcarriers that may be constant in the number regardless of numerology, and the number may be 12 or the like. The number of subcarriers included in the RB may be determined in accordance with numerology.

The RB has a time domain that may include one or a plurality of symbols and have a length of one slot, one mini slot, one sub frame, or one TTI. One TTI, one sub frame, or the like may each be constituted by one or a plurality of resource blocks.

One or a plurality of RBs may each be called a physical resource block (physical RB (PRB)), a subcarrier group (SCG), a resource element group (REG), a PRB pair, an RB pair, or the like.

A resource block may be constituted by one or a plurality of resource elements (REs). For example, one RE may be a radio resource domain of one subcarrier and one symbol.

A bandwidth part (BWP) (that may be called partial bandwidth) may indicate a subset of consecutive common resource blocks (RBs) for numerology in a certain carrier. The common RBs may be specified by an RB index with respect to a common reference point of the carrier. The PRB may be defined by a certain BWP and numbered in the BWP.

The BWPs may include a BWP for uplink (UL BWP) and a BWP for downlink (DL BWP). For the UE, one or a plurality of BWPs may be set in one carrier.

At least one of the BWPs thus set may be active, and the UE may not assume transmission or reception of a predetermined signal/channel outside the active BWP. The terms "cell", "carrier", and the like in the present disclosure may be regarded as "BWP".

The radio frame, the sub frame, the slot, the mini slot, the symbol, and the like each have a merely exemplified structure. For example, various changes are applicable to configurations such as the number of sub frames included in a radio frame, the number of slots per sub frame or radio frame, the number of mini slots included in a slot, the numbers of symbols and RBs included in a slot or a mini slot, the number of subcarriers included in an RB, the number of symbols in a TTI, symbol length, and cyclic prefix (CP) length.

The terms "connected", "coupled", or any variations thereof, indicate any direct or indirect connection or coupling between two or more elements. Furthermore, one or more intermediate elements may be interposed between two elements "connected" or "coupled" to each other. Coupling or connection between elements may be physical, logical, or a combination thereof. For example, "connection" may be regarded as "access". Two elements mentioned in the present disclosure can be regarded as being "connected" or "coupled" to each other with use of at least one of one or more wires, cables, and printed electrical connection, and as some non-limiting and non-comprehensive examples, with use of electromagnetic energy having wavelengths in a radio frequency domain, a microwave domain, and light (both visible and invisible) domains, and the like.

The reference signal may be abbreviated as RS, and may be called pilot in accordance with an applied standard.

The present disclosure includes the expression "in accordance with" that does not indicate "in accordance only with" unless otherwise specified. In other words, the expression "in accordance with" indicates both "in accordance only with" and "at least in accordance with".

The term "means" in the configuration of each of the above devices may be replaced with the term "part", "circuit", "device", or the like.

Any reference to elements including designation such as "first" or "second" in the present disclosure does not generally limit the amount or the order of those elements. Such designation can be used in the present disclosure in a convenient manner for distinction between two or more elements. Therefore, reference to first and second elements does not imply that only two elements can be adopted, or that the first element must precede the second element in some manner.

If the present disclosure includes terms "include", "including", and variants thereof, these terms are intended to be comprehensive in a manner similar to the term "comprising". Furthermore, the term "or" used in the present disclosure is intended not to be an exclusive disjunction.

If translation of the present disclosure additionally includes articles such as "a", "an", and "the" in English, a noun following any one of these articles may include a plural form in the present disclosure.

The present disclosure includes the terms "determining (judging)" and "determining" that may include various types of operation. The term "determining (judging)" or "determining" can include assumption of determining (judging)" or "determining" completion of judging, calculating, computing, processing, deriving, investigating, looking up, searching, or inquiring (searching a table, a database, or a different data structure), or ascertaining. The term "determining (judging)" or "determining" can further include assumption of determining (judging)" or "determining" completion of receiving (e.g. receiving information), transmitting (e.g. transmitting information), inputting, outputting, or accessing (e.g. accessing data in a memory). The term "determining (judging)" or "determining" can moreover include assumption of determining (judging)" or "determining" completion of resolving, selecting, choosing, establishing, comparing, or the like. The term "determining (judging)" or "determining" can thus include assumption of determining (judging)" or "determining" some operation. The term "judging (determining)" may be regarded as "assuming", "expecting", "considering", or the like.

In the present disclosure, the expression "A and B are different" may indicate that "A and B are different from each other". The expression may also indicate that "A and B are each different from C". Terms such as "leave" and "coupled" may also be interpreted in the same manner as "different".

Although the present disclosure has been described in detail, it will be obvious to those skilled in the art that the present disclosure should not be limited to the embodiments described in the present disclosure. The present disclosure can be implemented with corrections and modifications without departing from the spirit and the scope of the present disclosure as defined by the claims. The present disclosure is accordingly described for exemplification, and does not have any intension of restriction to the present disclosure.

### Reference Signs List

10 Radio communication system
20 NG-RAN
100A, 100B gNB
UE 200
210 Radio signal transmitter/receiver
220 Amplifier
230 Modulator/demodulator
240 Control signal/reference signal processor
250 Encoder/decoder
260 Data transmitter/receiver
270 Controller
BM Beam
1001 Processor
1002 Memory
1003 Storage
1004 Communication device
1005 Input device
1006 Output device
1007 Bus

## Claims

1. A terminal comprising:
a receiver configured to receive a demodulation reference signal from a network; and
a controller configured to restrict ports or combinations of the ports used for generation of the demodulation reference signal in a case of using a different frequency band different from a frequency band including one or a plurality of frequency ranges, or in a case of applying subcarrier spacing wider than subcarrier spacing for the case of using the frequency band.

2. A terminal comprising:
a receiver configured to receive a plurality of types of demodulation reference signals from a network; and
a controller configured to restrict the types of the demodulation reference signals in a case of using a different frequency band different from a frequency band including one or a plurality of frequency ranges, or in a case of applying subcarrier spacing wider than subcarrier spacing for the case of using the frequency band.

3. A terminal comprising:
a receiver configured to receive a single-symbol demodulation reference signal or a double-symbol demodulation reference signal from a network; and
a controller configured to restrict to either the single-symbol demodulation reference signal or the double-symbol demodulation reference signal in a case of using a different frequency band different from a frequency band including one or a plurality of frequency ranges, or in a case of applying subcarrier spacing wider than subcarrier spacing for the case of using the frequency band.
